# EUROPÄISCHE PATENTSCHRIFT

(11) **EP 1 520 089 B1**
(45) Veröffentlichungstag und Bekanntmachung des Hinweises auf die Patenterteilung: **28.07.2010**
(21) Anmeldenummer: 03761396.5
(22) Anmeldetag: 19.02.2003
(51) Int. Cl.: F02B 37/10, F02B 39/12, F02B 39/10, F02B 37/14

(54) **LADELUFT-VERDICHTER MIT ELEKTROZUSATZANTRIEB**
CHARGE AIR COMPRESSOR WITH AN ELECTRIC AUXILIARY DRIVE
COMPRESSEUR D'AIR DE SURALIMENTATION A ENTRAINEMENT AUXILIAIRE ELECTRIQUE

(30) Priorität: 28.06.2002 DE 10229133
(43) Veröffentlichungstag der Anmeldung: 06.04.2005
(73) Patentinhaber: Bosch Mahle Turbo Systems GmbH & Co. KG, 70376 Stuttgart (DE)
(72) Erfinder: HARNDORF, Horst, 34270 Schauenburg (DE)
(74) Vertreter: Jooß, Martin
(86) Internationale Anmeldenummer: PCT/DE2003/000503
(87) Internationale Veröffentlichungsnummer: WO 2004/003359

(56) Entgegenhaltungen:
- EP-A- 0 304 384
- EP-A- 0 420 666
- DE-A- 3 225 389
- DE-A- 10 061 847
- DE-A- 19 924 918
- US-A- 5 771 695
- US-A- 5 870 894
- US-A1- 2002 041 813

## Beschreibung

### Technisches Gebiet

Aufladeeinrichtungen für Verbrennungskraftmaschinen erhöhen den Luftdurchsatz eines Verbrennungsmotors durch Vorverdichtung der zur Verbrennung des Kraftstoffs benötigten Luft. Durch den Einsatz von Aufladeeinrichtungen lassen sich höhere Leistungsdichten von Verbrennungskraftmaschinen bei gleichbleibendem Hubraum, verbesserten Kraftstoffverbräuchen und niedriger liegenden Abgasemissionen erzielen. Als Aufladeeinrichtungen, die im Allgemeinen auch als "Lader" bezeichnet werden, kommen im Allgemeinen mechanische Lader, Abgasturbolader oder Druckwellenlader zum Einsatz.

Die US 2002/041813 A1 offenbart einen Abgasturbolader gemäß Oberbegriff von Anspruch 1.

### Stand der Technik

Bei mechanischen Ladern besteht eine mechanische Kopplung zwischen Lader und der Kurbelwelle der Verbrennungskraftmaschine. Die erforderliche Verdichtungsleistung eines mechanischen Laders wird folglich von der Leistung der Verbrennungskraftmaschine abgezweigt. Bei den ferner als Ladern eingesetzten Abgasturboladern wird die zur Verdichtung der Luft erforderliche Verdichtungsleistung aus dem Abgas der Verbrennungskraftmaschine gewonnen. Es besteht eine strömungstechnische Kopplung zwischen der Verbrennungsicraftmaschine, d. h. deren Auslasstrakt und dem Turbinenlaufrad des Abgasturboladers, welches seinerseits die Verdichterstufe des Abgasturboladers im Ansaugtrakt der Verbrennungskraftmaschine antreibt. Bei Druckwellenladern, die einen elektrischen Antrieb zur besseren individuellen Ansteuerung in allen Betriebspunkten der Verbrennungskraftmaschine aufweisen können, wird die zur Verdichtung der zur Verbrennung erforderlichen Luft nötige Verdichterleistung ebenfalls aus dem Abgas der Verbrennungskraftmaschine gewonnen. Bei Druckwellenladern ist neben der strömungstecluüscheii Kopplung des Laders an die Verbrennungskraftmaschine auch eine mechanische Kopplung des Dmckwellenladers mit der Verbrennungskraftmaschine erforderlich.

Mit den erwähnten Aufladeeinrichtungen lässt sich grundsätzlich das Drehmoment kleinerer Verbrennungskraftmaschinen auf das Drehmomentniveau von Verbrennungskraftmaschinen mit größerem Hubraum anheben. Abgasturbolader bieten durch den höheren effektiven Mitteldruck und durch Nutzung der Energie des Abgasstromes der Verbreruiungskraftmaschine zudem deutliche Verbrauchsvorteile. Abgasturbolader sind jedoch trotz aller Weiterentwicldung, wie z. B. einer optimierten Ladergröße und der Entwicklung variabler Schaufekadgeometrien, nach wie vor mit dem Nachteil behaftet, dass in den hinsichtlich des Ladedruckes kritischen Drehzahlbereichen unterhalb von 2000 min⁻¹ aufgrund eines nicht ausreichenden Abgasstromes der Verbrennungskraftmaschine, das sogenannte "Turbo-Loch" auftritt. In diesem Drehzahlbereich der Verbrennungskraftmaschine lässt sich eine Drehmomenterhöhung der Verbrennungskraftmaschine mittels eines Abgasturboladers nur bedingt erreichen.

DE 32 25 389 A1 hat eine Vorrichtung zum Antrieb von Hilfsaggregaten in Kraftfahrzeugen zum Gegenstand. Als Antriebsmittel kommt ein Verbrennungsmotor zum Einsatz, bei dem in die wirkverbindung zwischen Verbrennungsmotor und anzutreibenden Hilfsaggregaten ein zwei- oder mehrstufiges Getriebe geschaltet ist. Das zwei- oder mehrstufige Getriebe bewirkt eine automatische drehzahlabhängige Umschaltung derart, dass die Hilfsaggregate mit eingeschränktem Drehzahlbereich an die Drehzahl der Verbrennungslaaftmaschine gekoppelt werden können. Die Hilfsaggregate werden zusätzlich durch eine im Abgaskanal der Verbrennungskraftmaschine angeordnete Turbine angetrieben. Durch entsprechende Vorwahl der Übersetzung des zwei- oder mehrstufigen Getriebes, wird die überschüssige, von der Turbine erzeugte und für den Antrieb der Hilfsaggregate nicht benötigte Leistung dem Verbrennungsmotor wieder zugeführt. Die Turbine im Abgaskanal der Verbrennungskraftmaschine treibt einen Generator an, dem ein Elektromotor über einen Leistungssteller nachgeschalte ist. Über eine dem Elektromotor zugeordnete Riernenscheibe wird der Antrieb der Hilfsaggregate unterstützt. Bei höheren Drehzahlen kann demnach die elektrische Maschine im Generatorbetrieb betrieben werden und nicht genutzte Energie des Abgasstromes in das Bordnetz des Kraftfahrzeugs einspeisen.

Ein Nachteil der aus DE 32 25 389 A1 bekannten Lösung liegt darin, dass sehr hohe Anforderungen an das Beschleunigungsvetiüögen der elektrischen Maschine gestellt werden. Daraus rührt eine kurzzeitige sehr hohe elektrische Leistungsaufnahme, die zu einem entsprechenden Spannungseinbruch im Bordnetz des Fahrzeuges führt.

Es sind ferner elektrisch betreibbare Ladeluftverdichter bekannt, zum Anschluss an eine Brennkraftmaschine, welche einen Elektromotor mit einem Stator und einen Rotor zum Antrieb des Verdichterrades des Ladeluftverdichters umfassen. Das Verdichterrad ist in einem mit wenigstens einem Lufteinlass und einem Luftauslass versehenen Verdichterradgehäuse angeordnet. Der Lufteinlass und der Luftauslass sind über einen im Verdichtergehäuse verlaufenden Strömungskanal miteinander verbunden. Durch Drehung des Verdichterrades in einem Verdichtungsabschnitt des Strömungskanales wird eine Verdichtung der Ladeluft erzielt. Der Ladeluftverdichter ist derart ausgebildet, dass das Verdichterrad in dem Verdichtergehäuse aus einer Arbeitsposition in eine Ruheposition und zurück verschiebbar ist, wobei das Verdichterrad bei einer Verschiebung in die Ruheposition wenigstens teilweise aus dem Verdichtungsabschnitt entfernt werden kann.

Eine weitere Entwicklungstendenz verläuft dahingehend, dass Turbinenteil und Verdichterteil eines Abgasturboladers mit einem elektrischen Antrieb starr verbunden werden können und während der Beschleunigungsphase eine Unterstützung des Antriebes des Abgasturboladers durch den Elektromotor erfolgt. Ladedruckaufbau und Motordynamik lassen sich zwar verbessern, jedoch beinhaltet dieser Ansatz mehrere Nachteile. Nährend der Beschleunigungsphase der Verbrennungskraftmaschine müssen sowohl der Turbinenteil als auch der Verdichterteil beschleunigt werden, obwohl in dieser Betriebsphase der Verbrennungskraftxnaschine primär nur der schnelle Hochlauf des Verdichterrades gewünscht wird. Da beide Teile, d. h. Turbinenteil und Verdichterteil des Abgasturboladers beschleunigt werden müssen, ist folglich das Massenträgheitsmoment größer, so dass die Antriebsleistung des elektrischen Antriebes entsprechend höher ausgelegt werden muss. Ein weiterer Nachteil dieses Ansatzes ist darin zu erblicken, dass bei starrer Kopplung von Turbinenteil und Verdichterteil des Abgasturboladers mit dem elektrischen Antrieb im stabilisierten Betrieb, d. h. wenn das turbinenseitige Druckgefälle für einen gewünschten Aufladegrad am Verdichter ausreichend ist, der elektrische Antrieb weiter betrieben oder mitgeschleppt werden muss. Sowohl das Weiterbetreiben des elektrischen Antriebes als auch dessen mitschleppen sind aus Gründen höherer Antriebsleistungen bzw. Ladedruckbeeinträchtigungen aus erhöhten Schleppmomenten jedoch höchst unerwünscht. Zur Umgehung dieser Nachteile wird auch der Weg beschritten, ein zusätzliches Verdichterrad mit separatem elektrischem Antrieb (Turboverdichter) als Bypasslösung in den Luftpfad, d. h. den Ansaugtrakt der Verbrennungskraftmaschine zu integrieien. Dieser Ansatz beinhaltet allerdings einen erheblichen Zusatz und Kostenaufwand, ferner erfordert diese Lösung weiteren Bauraum, der jedoch nur in begrenztem Maße zur Verfügung steht.

### Darstellung der Erfindung

Die erfindungsgemäß vorgeschlagene Lösung verwirklicht eine Verbindung zwischen dem Verdichterteil des Abgasturboladers und einem Zusatzantrieb, welche nur im Bedarfsfalle, d. h. innerhalb eines kritischen Drehzahlbereiches der Verbrennungskraftmaschine wirksam ist. Der Zusatzantrieb, z. B. ausgebildet als elektrischer Antrieb, ist mit dem Abgasturbolader über eine Freilaufeinrichtung und eine Überholkupplung verbunden. Freilaufeinrichtung und Überholkupplung sind in den Verdichterteil des Abgasturboladers integriert. Damit ist es möglich, dass in unkritischen Betriebspunkten, d. h. hoher Drehzahl des Turbinenlaufrades des Abgasturboladers und greifender Freilaufsperre im Verdichterteil, der Zusatzantrieb über eine Trennkupplung vom Verdichterteil getrennt werden kann. Es ist demnach keine starre Verbindung zwischen dem Turbinenteil und dem Verdichterteil des Abgasturboladers vorgesehen. Mit dieser Lösung lässt sich der Verdichterteil des Abgasturboladers optional, d. h. in ladedruckschwachen Kennfeldbereichen durch den Zusatzantrieb unterstützen. Dieser kann je nach Bedarf über die Kupplung zugeschaltet bzw. abgeworfen werden, so dass erhöhte Schleppmomente, die aus Gründen höherer Antriebsleistungen bei stark gekoppelten Abgasturboladersystemen auftreten, vermieden werden können. Ferner lässt sich durch die erfindungsgemäß vorgeschlagene Lösung erreichen, dass Ladedruckbeeinträchtigungen aufgrund erhöhter Schleppmomente ausbleiben.

Dies eröffnet die Möglichkeit, nur das Verdichterlaufrad in ladedruckscbwachen Drehzahlbereichen der Verbrennungskraftmaschine durch den elektrischen Zusatzantrieb zu unterstützen, in welcher der Abgasstrom der Verbrennungskraftmaschine nicht ausreichend ist, um über den Turbinenteil des Abgasturboladers eine für eine Ladedruckerhöhung ausreichende Verdichterleistung bereitzustellen. Dieser, als "Turbo-Loch" bekannte Drehzahlbereich einer Verbrennungskraftmaschine mit Abgasturbolader, liegt in einem hinsichtlich des aufgebauten Ladedruckes kritischen Drehzahlbereich einer Verbrennungskraftmasrhine unterhalb von 2000 min⁻¹.

Die eine optionale Kopplung zwischen Verdichterteil und Zusatzantrieb ermöglichende Kupplung erlaubt es, den elektrischen Zusatzantrieb je nach Leistungsbedarf des Verdichterlaufrades des Abgasturboladers zuzuschalten bzw. als Last betrachtet, abzuwerfen. Die Kupplung, die zwischen dem Turbinenteil und dem Verdichterteil des Abgasturboladers auf der Lagerwelle angeordnet ist, kann z. B. als Lamellenkupplung oder auch als elektromagnetische Kupplung ausgebildet werden, die darüber hinaus Synchronisationsfunlctionen übernehmen können.

Insbesondere bietet die erfindungsgemäß vorgeschlagene Lösung die Möglichkeit, nur den Verdichterteil des Abgasturboladers mit einem Zusatzantrieb zu beschleunigen, so dass im Vergleich zu den Lösungen des Standes der Technik aufgrund des geringeren Massenträgheitsmomentes nur des Verdichterteiles des Abgasturboladers die Antriebsleistung des elektrischen Zusatzantriebes entsprechend geringer ausgelegt werden kann und sich eine verbesserte Motordynamik auch im kritischen Drehzahlbereich einer Verbrennungskraftmaschine mit Abgasturbolader einstellt. Mit der erfindungsgemäß vorgeschlagenen Lösung eines lediglich den Verdichterteil eines Abgasturboladers im Bedarfsfall antreibenden elektrischen Antriebes kann der Einsatz eines separaten elektrischen Turboverdichters im Ansaugtrakt der Verbrennungskraftmaschine umgangen werden. Es können die damit einhergehende Nutzung kostbaren Bauraumes und die damit einhergehenden Kosten eingespart werden.

### Zeichnung

Anhand der Zeichnung wird die Erfindung nachstehend eingehender beschrieben.

Es zeigt:
- Figur 1: eine schematisch dargestellte Verbrennungskraftmaschine mit Abgastur- bolader und dessen Verdichterteil bedarfsweise antreibenden Zusatzan- trieb,
- Figur 2: eine Darstellung des Verdichterteiles des Abgasturboladers und des Zu- satzantriebes in vergrößertem Maßstab und
- Figur 3: ein Ladedruck-/Drehzahl-Diagramm einer Verbrennungskraftmaschine mit Abgasturbolader, dessen Verdichterteil mit einem Zusatzantrieb ver- bindbar ist.

### Ausführunssvarianten

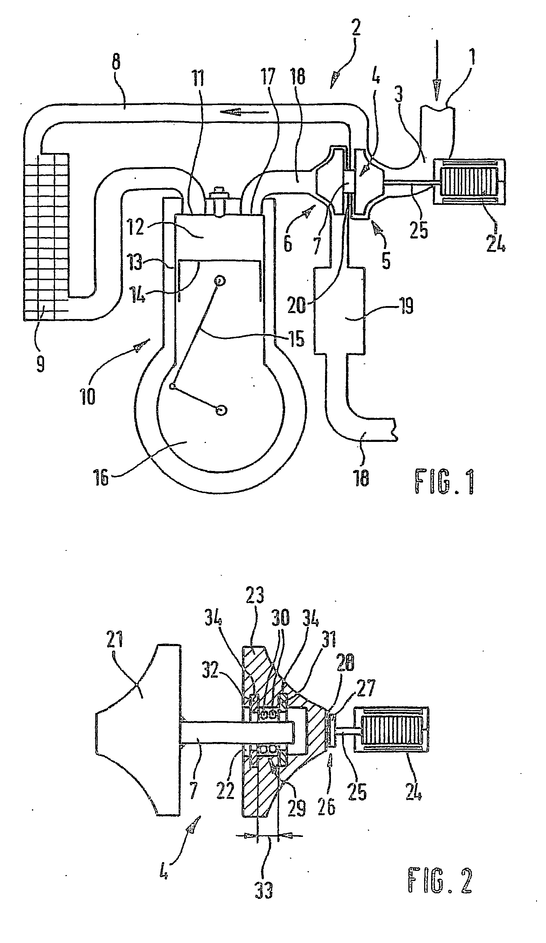

Figur 1 ist eine schematisch dargestellte Verbrennungskraftmaschine mit Abgasturbolader entnehmbar, dessen Verdichterteil mit einem bedarfsweise zuschaltbaren Zusatzantrieb verbunden werden kann.

Frischluft - angedeutet durch den auf einem Frischlufteinlass 1 zuweisenden Pfeil - wird durch ein Ansaugrohr 3 im Ansaugtrakt 2 einer Verbrennungskraftmaschine 10 angesaugt. Im Ansaugrohr 3 ist an einer Querscbnittserweiterung des Ansaugrohres 3 ein Verdichterteil 5 eines Abgasturboladers 4 - hier nur schematisch angedeutet - angeordnet. Auslassseitig des Verdichterteiles 5 des Abgasturboladers 4 schließt sich ein Ansaugrohrabschnitt 8 an, in welchen die über den Verdichterteil 5 vorverdichtete Ansaugluft eintritt. Zur Absenkung der bei der Verdichtung der Frischluft auftretenden Temperaturerhöhung wird die den Ansaugrohrabschnitt 8 passierende vorverdichtete Frischluft durch einen Ladeluftkühler 9 geleitet, um die vorverdichtete Frischluft abzukühlen, was hinsichtlich der Zylinderfüllung der einzelnen Zylinder der Verbrennungskraftmaschine günstig ist. Die den Ladeluftkühler 9 verlassende vorverdichtete Frischluft tritt an einem Einlass 11 in einen Brennraum 12 der Verbrennungskraftmaschine 10 ein, der einerseits durch eine hier nur schematisch angedeutete Zylinderwandung 13 und die Stirnfläche eines Kolbens 14 begrenzt wird. Je höher die vorverdichtete Frischluft verdichtet ist, eine umso bessere Füllung des Brennraumes 12 der Verbrennungskraftmaschine lässt sich erreichen. Bei der Verbrennungskraftmaschine 10 kann es sich sowohl um eine fremdgezündete, als auch um eine selbstzündende mehrzylindrige Verbrennungskraftmaschine handeln, die sowohl für Anwendungen an Kraftfahrzeugen wie auch für Anwendungen an Nutzfahrzeugen zum Einsatz kommt. Der Kolben 14 ist über ein angelenktes Pleuel 15 mit einer hier nicht dargestellten Kurbelwelle verbunden, die innerhalb eines Kurbelgehäuses 16 im unteren Bereich der Verbrennungskraftmaschine rotiert und die Auf- bzw. Abwärtsbewegung des Kolbens 14 in eine Drehbewegung umwandelt.

Das den Brennraum 12 über einen Auslass 17 verlassende Abgas strömt in einen Abgaskanal 18, in welchem analog zum Ansaugrohr 3 eine Querschnittserweiterung ausgebildet ist, die ein Gehäuse für einen Turbinenteil 6 des Abgasturboladers 4 bildet. Der Turbinenteil 6 des Abgasturboladers ist mit dem Verdichterteil 5 des Abgasturboladers über eine Laderwelle 7 verbunden. Die Laderwelle 7 durchsetzt eine Trennwand 20, welche den Ansaugtrakt 2 vom Abgaskanal 18 der Verbrennungskraftmaschine 10 trennt. Das eingangsseitig über den Abgaskanal 18 in den Turbinenteil 6 des Abgasturboladers 4 eintretende Abgas verlässt den Turbinenteil 6 in radialer Richtung, um in einen Schalldämpfer 19 abzuströmen. Bei der Passage des Turbinenteiles 6 wird dem Abgasstrom, der den Brennraum 12 der Verbrennungskraftmaschine 10 auslassseitig verlässt Energie entzogen, die in kinetische Energie umgewandelt wird und zum Antrieb des Verdichterteiles 5 des Abgasturboladers 4 im Ansaugtrakt 2 der Verbrennungskraftmaschine 10 dient.

Das in der schematischen Darstellung gemäß Figur 1 dargestellte Verdichterteil 5 des Abgasturboladers 4 ist über ein Antriebswelle 25 mit einer einen Motor und einen Stator umfassenden insbesondere als elektrische Maschine ausgebildeten autarken Zusatzantrieb 24 gekoppelt. Über den Zusatzantrieb 24, welcher bevorzugt als elektrischer Antrieb ausgebildet ist, kann das Verdichterteil 5 des Abgasturboladers 4 unabhängig vom Turbinenteil 6 des Abgasturboladers 4 angetrieben wird, wenn das auslassseitig in den Abgaskanal 18 eintretende Abgasvolumen nicht ausreichend ist, um den Turbinenteil 6 des Abgasturboladers 4 derart anzutreiben, dass über den Verdichterteil 5 des Abgasturboladers 4 eine genügende Ladedruclcerhöhung erzielt werden kann. Dies tritt bei Verbrennunaskraftmaschinem mit Abgasturboladern innerhalb eines hinsichtlich der Ladedruckentwicklung kritischen Drehzahlbereiches unterhalb einer Drehzahl von unterhalb 2000 min⁻¹ auf.

Figur 2 zeigt eine Darstellung des Verdichterteilantriebes des Abgasturboladers und die Kopplungsstelle des Verdichterteiles des Abgasturboladers mit einem autarken Zusatzantrieb in vergrößertem Maßstab.

Figur 2 ist entnehmbar, dass der Turbinenteil 6 eines Abgasturboladers ein Turbinenlaufrad 21 umfasst, welches drehfest mit Laderwelle 7 verbunden ist. Der als Verdichterlaufrad 23 ausgebildete Verdichterteil 5 des Abgasturboladers 4 ist gegenüber dem Turbinenlaufrad 21 des Turbinenteils 6 des Abgasturboladers 4 liegend, aufgenommen. Das Verdichterlaufrad 23 umfasst eine Ausnehmung 22, in welcher eine Freilaufeinrichtung 29 aufgenommen ist. Die Freilaufeinrichtung kann derart ausgebildet sein, dass in Ringnuten 34 an der Umfangsfläche der Ausnehmung 22 scheibenförmige Elemente 31 und 32 eingelassen werden können, zwischen denen als Rollen ausgebildete Freilaufelemente 30 angeordnet werden. Die Freilaufeinrichtung 29 ermöglicht einen Antrieb des als Verdichterlaufrad 23 ausgebildeten Verdichterteiles 5 des Abgasturboladers 4, wobei nur das Verdichterlaufrad 23 angetrieben wird. Der Antrieb des Verdichterlaufrades 23 erfolgt über einen Zusatzantrieb 24, der bevorzugt als eine elektrische Maschine ausgebildet ist, die über eine Antriebswelle 25 auf das Verdichterlaufrad 23 einwirkt. Dadurch, dass nur das Verdichterlaufrad 23 des Abgasturboladers 4 über den bevorzugt als elektrischen Zusatzantrieb ausgebildeten Antrieb 24 angetrieben wird, ist das Massenträgheitsmoment, welches auf den als elektrischen Antrieb ausgebildeten Zusatzantrieb 24 einwirkt, wesentlich geringer gegenüber den aus dem Stand der Technik bekannten Lösungen, bei denen sowohl das Turbinenlaufrad 21 des Turbinenteiles 6 als auch das Verdichterlaufrad 23 des Abgasturboladers 4 gemeinsam über einen elektrischen Zusatzantrieb angetrieben werden. Demzufolge ist mit der in Figur 2 dargestellten Ausführungsvariante der erfindungsgemäß vorgeschlagenen Lösung eine geringere Antriebsleistung an der als elektrischen Antrieb ausgebildeten Zusatzantriebseinrichtung 24 erzielbar. Demzufolge baut die eingesetzte elektrische Maschine 24 wesentlich kleiner, da nur geringere Massenträgheitsmomente während der Beschleunigungsphase auftreten.

Darüber hinaus ist der Darstellung gemäß Figur 2 entnehmbar, dass zwischen den dem elektrischen Zusatzantrieb 24 zuweisenden Ende der Laderwelle 7 und der Antriebswelle 25 der elektrischen Maschine 24 eine Kupplung 26 angeordnet ist. Die Kupplung 26 umfasst eine antriebsseitige Kupplungsfläche 27, die mit der Antriebswelle 24 des autarken, elektrischen Zusatzantriebes 24 verbunden ist und eine abtriebsseitige Kupplungsfläche 28, die an einer Stirnseite der Laderwelle 7 des Abgasturboladers 4 ausgebildet sein kann. Die Kupplung 26 wirkt als Überholkupplung. Falls die Verbrennungskraftmaschine einen unkritischen Betriebspunkt erreicht hat, d. h. aufgrund eines ausreichenden Abgasstromes liegt die Turbinendrehzahl hoch, greift die in Figur 2 dargestellte Freilaufsperre 29 und die elektrische Maschine 24 kann über die Kupplung 26 vom Verdichterteil 5 abgeworfen werden. Somit wirkt der elektrische Zusatzantrieb 24 nicht über Schleppmomente auf das durch den Abgasstrom angetriebene Turbinenteil 6 des Abgasturboladers 4 zurück. Der hinsichtlich des Turbinenteiles 6 wirkende Freilauf 29 erlaubt hingegen, bei nicht ausreichendem Abgasstrom im Abgastrakt der Verbrennungskraftmaschine demzufolge nur unzureichende Antriebsleistung des Turbinenteiles 6, das Verdichterteil 5 unabhängig vom Turbinenteil 6 über den elektrischen Zusatzantrieb 24 anzutreiben. In diesem Fall wirkt die Kupplung 26 nicht als Überholkupplung sondern als Einkopplungsstelle für den elektrischen Zusatzantrieb 24, welcher erlaubt, das Verdichterteil aufgrund der Wirkung des Freilaufes 29 unabhängig von der Drehzahl des Turbinenteiles 6 des Abgasturboladers 4 anzutreiben. Somit kann der elektrische Zusatzantrieb 24 bedarfsgerecht über die Kupplung 26 abgeworfen bzw. zugeschaltet werden. Bei Zuschaltung des elektrischen Zusatzantriebes 24 aufgrund nicht ausreichender Drehzahl des Turbinenteiles 6 des Abgasturboladers 4 wirkt die Kupplung als Antriebskupplung auf das Verdichterlaufrad 23, wohingegen aufgrund der Wirkung des im Verdichterlaufrad 23 integrierten Freilaufes 29 bei ausreichendder Turbinendrehzahl und wirksamer Sperre des Freilaufes 29, der elektrische Zusatzantrieb 24 abgeworfen wird; in diesem Falle ist die Kupplung 26 unwirksam.

Mit der in Figur 2 dargestellten Lösung lässt sich eine starre Verbindung zwischen Turbinenteil 6 und Verdichterteil 5 eines Abgasturboladers 4 vermeiden. Das Verdichterlaufrad 23 des Verdichterteiles 5 des Abgasturboladers 4 sitzt auf der Laderwelle 7 unter Zwischerlschaltung einer Freilaufeinrichtung 29, wobei an der Laderwelle 7 eine als Überholkupplung bildende Kupplung 26 ausgebildet ist.

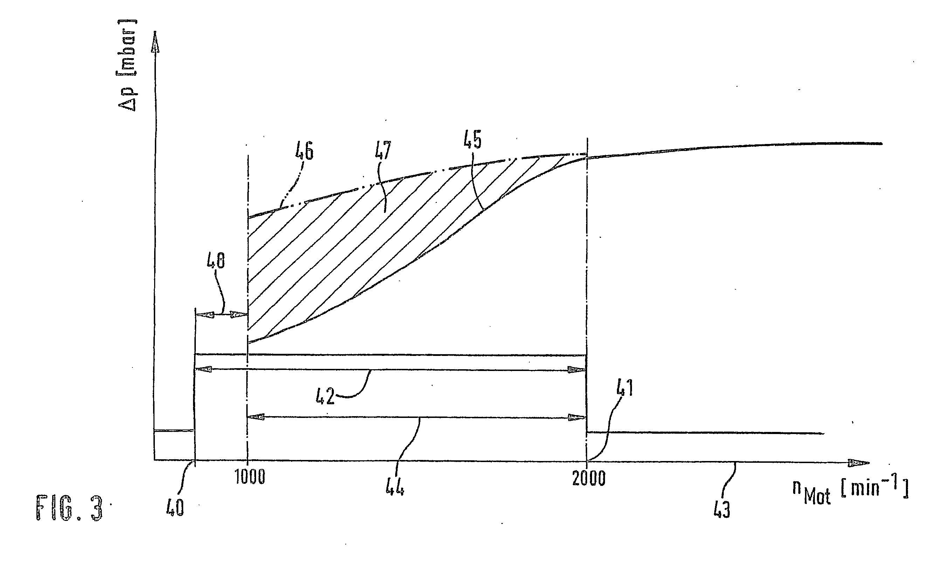

Durch die gewählte Lösung kann das Verdichterrad 23 des Abgasturboladers nur optional, d.h. in den Laderdruck schwachen Kennfeldbereichen innerhalb eines kritischen Drehzahlbereiches 44 (vergleiche Figur 3) der Verbrennungskraftmaschine 10 des autarken elektrischen Zusatzantriebes 24 angetrieben werden.

Figur 3 zeigt ein Ladedruck-/Drehzahldiagramm einer Verbrennungskraftmaschine mit Abgasturbolader, dessen Verdichterteil mit einem elektrischen Zusatzantrieb ausgerüstet ist.

Aus der Darstellung gemäß Figur 3 geht hervor, dass der autarke, bevorzugt als elektrischer Zusatzantrieb ausgebildete Antrieb 24 unterhalb eines kritischen Drehzahlbereiches 44 der Verbrennungskraftmaschine 10 zu einem Zeitpunkt 40 eingeschaltet wird. Dieser Einschaltzeitpunkt 40 liegt in bezug auf das Erreichen eines unteren kritischen Drehzahlwertes, im vorliegenden Beispiel etwa 1000 min⁻¹ um einen zeitlichen Vorlauf 48 nach vorne verlegt. Die gesamte Einschaltdauer 42 des elektrischen, autarken Zusatzantriebes 24 ist durch die Einschaltdauer 42 gegeben, welche sich vom Einschaltzeitpunkt 40 des elektrischen Zusatzantriebes bis zu dessen Ausschaltzeitpunkt 41 bei Erreichen einer oberen Drehzahlschwelle des kritischen Drehzahlbereiches 44 der Verbrennungskraftmaschine 10 erstreckt. Im in Figur 3 dargestellten Beispiel liegt der hinsichtlich einer ausreichenden Ladedruckentwicklung kritische Drehzahlbereich unterhalb einer Drehzahl von 2000 min⁻¹. Innerhalb dieses kritischen Drehzahlbereiches 44, welcher in der Regel einem Teillastbereich der Verbrennungskraftmaschine 10 mit Abgasturbolader 4 entspricht, ist ein erster Ladedruckverlauf 45 zugeordnet. Aufgrund des im Teillastbereich der Verbrennungskraftmaschine 10 geringen Abgasvolumenstromes, reicht die zum Antrieb des Turbinenteiles 6 des Abgasturboladers 4 zur Verfügung stehende kinetische Energie des Abgases nicht dazu aus, den Verdichterteil 5, 23 des Abgasturboladers 4 so anzutreiben, das dieser im Ansaugtrakt 2 der Verbrennungslcrafttnaschine 10 für eine ausreichende Ladedruclcerhöhung sorgen kann. Es kommt in diesen Drehzahlbereich, der dem kritischen Drehzahlbereich 44 der Verbrennungskraftmaschine 10 entspricht, zum Auftreten des sogenannten "Turbo-Loches".

Durch Zuschalten des elektrischen Zusatzantriebes 24, der nur den Verdichterteil 5, 23 des Abgasturboladers 4 antreibt, lässt sich eine Ladedruclcerhöhung im Ansaugtrakt 2 der Verbrennungskraftmaschine 10 entsprechend des zweiten Ladedruckverlaufes, der durch Bezugszeichen 46 in Figur 3 gekennzeichnet ist, erreichen. Der schraffierte Bereich, stellt den Ladedruckzuwächs 47 dar, der aufgrund des Zuschaltens des Verdichterteiles 5, 23 des Abgasturboladers 4 im Ansaugtrakt 2 der Verbrennungskraftmaschine 10 erreicht werden kann. Liegt die Drehzahl der Verbrennungskraftmaschine 10 noch unterhalb der unteren Schwelle des kritischen Drehzahlbereiches 44, erfolgt durch das Einschalten 40 des autarken, elektrischen Zusatzantriebes 24 über die Antriebswelle 25 durch die Kupplung 26, der Antrieb des Verdichterlaufiades 23 unabhängig vom auf der Laderwelle 7 angeordneten Turbinenlaufrad 21. Zu diesem Zweck ist das Verdichterlaufrad 23 fliegend auf der Laderwelle 7 durch Zwischenschaltung eines Freilaufes 29 gelagert. Innerhalb dieses Drehzahlbereiches übernimmt der autarke, elektrische Zusatzantrieb 24 den Antrieb des Verdichterlaufrades 23. Oberhalb dieses kritischen Drehzahlbereiches liegt die Drehzahl des Turbinenlaufrades 21 so hoch, dass die Sperre des Freilaufes 29 innerhalb des Verdichterlaufrades 23 greift, so dass der elektrische Zusatzantrieb 24 über die Kupplung 26 vom Verdichterrad 23 getrennt werden kann.

Durch das Vorsehen der Freilaufeinrichtung 29 zwischen dem Verdichterlaufrad 23 des Verdichterteiles 5 des Abgasturboladers 4 und der Laderwelle 7, an dem das Turbinenlaufrad 21 aufgenommen ist, beschleunigt der elektrische Antrieb 24 nur das Verdichterlaufrad 23. Zum Einschaltzeitpunkt 40 des elektrischen, autarken Zusatzantriebes 24 reicht der das Turbinenlaufrad beaufschlagende Abgasstrom im Teillastbereich der Verbrennungskraftmaschine 10, welcher den Abgaskanal 18 passiert, zum Antrieb des Verdichterlaufrades 23 im Verdichterteil 5 des Abgasturboladers 4 nicht aus. Daher wird in diesem durch schwachen Ladedruck gekennzeichneten Betriebsbereich der Verbrennungskraftmaschine das Verdichterlaufrad 23 des Verdichterteiles 5 des Abgasturboladers 4 über den elektrischen Antrieb 24 beschleunigt. Es stellt sich ein Ladedruckzuwachs gemäß des Kurvenzuges 46, der einem zweiten Ladedruckverlauf entspricht, im Ansaugtrakt 2, 8 der Verbrennungskraftmaschine 10 ein. Bei niedrigeren Drehzahlen innerhalb des kritischen Drehzahlbereiches 44 der Verbrennungslaaftmaschine ist der erzielte Ladedruckzuwachs 47 proportional am größten. Mit steigender Drehzahl der Verbrennungslcraftmaschine 10 innerhalb des kritischen Drehzahlbereiches 44 nimmt der Ladedruckzuwachs bis zum Erreichen der oberen Drehzahlschwelle des kritischen Drehzahlbereiches 44 kontinuierlich ab. Entsprechend der Drehzahlzunahme innerhalb des kritischen Drehzahlbereiches 44 der Verbrennungskraftmaschine nimmt auch der Abgasstrom im Abgaskanal 18 an der Auslassseite 17 der Verbrennungskraftmaschine 10 kontinuierlich zu, bis dieser zum Antrieb des Turbinenlaufrades 21 des Turbinenteiles 6 des Abgasturboladers 4 wieder ausreicht. Zu diesem Zeitpunkt, der abhängig von über das Turbinenlaufrad 21 auf die Laderwelle 7 ausgeübten Drehmomentes ist, geht die Freilaufeinrichtung 29 an ihrer Freilaufiunlction in ihre Sperrfunktion über, d.h. das Verdichterlaufrad 23 des Verdichterteiles 5 des Abgasturboladers 4 übernimmt den Antrieb des Verdichterlaufrades 23, so dass im Ansaugtrakt 2, δ der Verbrennungskraftmaschine 10 wieder eine ausreichende Ladedruckerhöhung allein aufgrund des Antriebes des Abgasturboladers 4 über das Turbinenlaufrad 21 im Abgaskanal 18 erfolgen kann. Über die Kupplung 26, 27, 28, die als Überholkupplung ausgebildet werden kann, erfolgt zum Zeitpunkt der Übernahme des Antriebes des Verdichterlaufrades 23 durch das Turbinenlaufrad 21 des Turbinenteiles 5 des Abgasturboladers 4 ein Abwurf, d.h. eine Unterbrechung der Verbindung zum elektrischen Antrieb 24, der ab dem Erreichen der oberen Drehzahlschwelle des kritischen Drehzahlbereiches 44 nicht mehr benötigt wird - vergleiche Figur 3, Ausschaltzeitpunkt 41. Zum Ausschaltzeitpunkt 41, der dem Abwurfzeitpunkt des elektrischen Antriebes 24 entsprechen kann, wird der elektrische, autarke Antrieb nicht mehr zum Antrieb des Verdichteriaufrades 23 des Verdichterteiles 5 des Abgasturboladers 4 benötigt. Durch Abwurf des elektrischen Antriebes 24 von der "Last", die das Verdichterlaufrad 23 des Verdichterteiles 5 des Abgasturboladers 4 darstellt, ausgehende Schleppmomente führen nicht zu einer Ladedruckbeeinträchtigung, da die über das Turbinenlaufrad 21 anstehende Leistung vollständig zum Antrieb des Verdichterlaufrad 23 umgesetzt wird und nicht für ein Mitbewegten des autarken, elektrischen Zusatzantriebes 24 gesorgt werden muss, da dieser vom Verdichterlauf 23 an der Kupplungsstelle 26 getrennt wurde.

Mit der erfindungsgemäßen Lösung lässt sich ein Antrieb nur des Verdichterteiles 5 des Abgasturboladers 4, d.h. des Verdichterlaufrades 22 in ladedruckschwachen Kennfeldbereichen, die einer kritischen Drehzahlbereich 44 der Verbrennungskraftmaschine 10 entsprechen, erreichen. Dieser kritische Drehzahlbereich 44 der Verbrennungskraftmaschine 10 entspricht einem Teillastbereich, in welchem die durch den Turbinenteil 6 des Abgasturboladers 4 erzeugbare Leistung aufgrund eines geringeren Abgasvolumensttomes nicht zur Ladedruckerhöhung auf der Verdichterseite 5 des Abgasturboladers 4 ausreicht. Über den elektrischen Zusatzantrieb 24 kann bedarfsgerecht der elektrische Zusatzantrieb 24 innerhalb des kritischen Drehzahlbereiches 44 der Verbrennungskraftmaschine zugeschaltet und nach Erreichen der oberen Drehzahlschwelle des kritischen Drehzahlbereiches 44 auch wieder abgeschaltet werden.

### Bezugszeichenliste

- 1: Frischlufteinlass
- 2: Ansaugtrakt
- 3: Ansaugrohr
- 4: Abgasturbolader (ATL)
- 5: Verdichterteil
- 6: Turbinenteil
- 7: Laderwelle
- 8: Ansaugabschnitt
- 9: Ladeluftkühler
- 10: Verbrennungskraftmaschine
- 11: Einlass
- 12: Brennraum
- 13: Zylinderwand
- 14: Kolben
- 15: Pleuel
- 16: Kurbelgehäuse
- 17: Auslass
- 18: Abgaskanal
- 19: Schalldämpfer
- 20: Trennwand Ansaugtrakt/Abgaskanal
- 21: Turbinenlaufrad
- 22: Ausnehmung Verdichterlaufiad
- 23: Verdichterlaufrad
- 24: Elektrischer Zusatzantrieb
- 25: Antriebswelle
- 26: Kupplung
- 27: Antriebsseitige Kupplungsfläche
- 28: Abtriebsseitige Kupplungsfläche
- 29: Freilauf
- 30: Freilaufelemente
- 31: Erste Scheibe
- 32: Zweite Scheibe
- 33: Abstand
- 34: Ringnut

- 40: Einschaltzeitpunkt elektrischer Zusatzantrieb
- 41: Ausschaltzeitpunkt elektrischer Zusatzantrieb
- 42: Einschaltdauer
- 43: Drehzahlverlauf Verbrennungslcraftmasclüne 10
- 44: Kritischer Drehzahlbereich Verbrennungslcraftmaschine
- 45: Erster Ladedruckverlauf
- 46: Zweiter Ladedruckverlauf
- 47: Ladedruckzuwachs innerhalb "Turboloch"
- 48: Vorlaufzeit Zusatzantrieb

## Patentansprüche

1. Abgasturbolader (4) für Verbrennungskraftmaschinen (10), die einen Turbinenteil (6) und einen Verdichterteil (5) umfasst, die an einer gemeinsamen Laderwelle (7) aufgenommen sind, das Turbinenteil (6) in einem Abgaskanal (18) der Verbrennungskraftmaschine (10) angeordnet ist und der Verdichterteil (5) im Ansaugtrakt (2) der Verbrennungskraftmaschine (10) untergebracht ist, wobei der Verdichterteil (5) einen in einen Lufteinlass und einen Luftauslass umfassendes Gehäuse aufweist, der Lufteinlass und der Luftauslass über einen Strömungskanal miteinander verbunden sind und durch Drehung des Verdichterteiles (5. 23) eine Verdichtung von Ladeluft erzielbar ist, wobei der Verdichterteil (5, 23) des Abgasturboladers (4) mit einem autarken, elektrischen Zusatzantrieb (24) unabhängig von der Last der Verbrennungskraftmaschine (10) antreibbar ist, **dadurch gekennzeichnet, dass** der autarke elektrische Zusatzantrieb (24) mit einem zeitlichen Vorlauf (48) in bezug auf das Erreichen einer unteren Drehzahlschwelle eines kritischen Drehzahlbereiches (44) der Verbrennungskraftmaschine (10) eingeschaltet wird.

2. Abgasturbolader (4) gemäß Anspruch 1, **dadurch gekennzeichnet, dass** das Verdichterteil (5, 23) der Aufladeeinrichtung (4) in bezug auf den Antriebsdrehsinn des elektrischen Antriebes (24) drehbar auf der Laderwelle (7) aufgenommen ist.

3. Abgasturbolader (4) gemäß Anspruch 2, **dadurch gekennzeichnet, dass** das Verdichterteil (5, 23) der Aufladeeinrichtung (4) mittels einer Freilaufeinrichtung (29) auf der Lagerwelle (7) aufgenommen ist.

4. Abgasturbolader (4) gemäß Anspruch 3, **dadurch gekennzeichnet, dass** die Freilaufeinrichtung (29) innerhalb des kritischen Drehzahlbereiches (44) der Verbrennungskraftmaschine (10) eine Rotation des Verdichterteiles (5, 23) relativ zur Laderwelle (7) zulässt und oberhalb des kritischen Drehzahlbereiches (44) der Verbrennungskraftmaschine (10) der Rotation des Verdichterteiles (5, 23) relativ zur Laderwelle (7) sperrt.

5. Abgasturbolader gemäß Anspruch 4, **dadurch gekennzeichnet, dass** der kritische Drehzahlbereich (44) der Verbrennungskraftmaschine (10), innerhalb dessen die Freilaufeinrichtung (29) eine Relativbewegung des Verdichterteiles (23) relativ zur Laderwelle (7) freigibt, unterhalb einer Drehzahl der Verbrennungskraftmaschine (10) von 2000 min⁻¹ liegt.

6. Abasturbolader (4) gemäß Anspruch 1, **dadurch gekennzeichnet, dass** zwischen der Laderwelle (7) der Aufladeeinrichtung (4) und dem autarken elektrischen Zusatzantrieb (24) eine Kupplung (26, 27, 28) angeordnet ist, welche bei Erreichen einer Sperrfunktion die zur Unterbindung der Rotation des Verdichterteiles (25) relativ zur Laderwelle (7) durch die Freilaufeinrichtung (29) oberhalb des kritischen Drehzahlbereiches (44), die Antriebsverbindung zwischen dem autarken elektrischen Zusatzantrieb (24) und dem Verdichterteil (5, 23) des Abgasturboladers (4) unterbricht.

7. Abasturbolader (4) gemäß Anspruch 6, **dadurch gekennzeichnet, dass** die Kupplung (26) eine antriebsseitige Kupplungsfläche (27) und eine abtriebsseitige Kupplungsfläche (28) umfasst, wobei die antriebsseitige Kupplungsfläche (27) an der Antriebswelle (25) des autarken, elektrischen Zusatzantriebes (24) und die abtriebsseitige Kupplungsfläche (28) an Verdichterlaufrad (23) ausgeführt ist.

8. Abasturbolader (4) gemäß Anspruch 1, **dadurch gekennzeichnet, dass** der Abschaltzeitpunkt (41) des autarken elektrischen Zusatzantriebes (25) mit der oberen Drehzahlschwelle des kritischen Drehzahlbereiches (44) der Verbrennungskraftmaschine (10) zusammenfällt.

9. Abasturbolader (4) gemäß Anspruch 3, **dadurch gekennzeichnet, dass** die Freilaufeinrichtung (29) innerhalb einer Ausnehmung (22) des Verdichterteiles (5. 23) aufgenommen ist und Freilaufelemente (30) umfasst, die zwischen zwei Begrenzungsscheiben (31, 32) aufgenommen sind.

10. Abasturbolader (4) gemäß Anspruch 6, **dadurch gekennzeichnet, dass** die Kupplung (26, 27, 28) im Antriebsdrehsinn des Turbinenteiles (6) der Aufladeeinrichtung (7) wirkend, die Antriebsverbindung zwischen der Laderwelle (7) und dem elektrischen Zusatzantrieb (24) bei Erreichen einer oberen Drehzahlschwelle des kritischen Drehzahlberefches (44) unterbricht.

## Claims

1. An exhaust gas turbocharger (4) for combustion engines (10) comprising a turbine part (6) and a compressor part (5) which are mounted on a common charger shaft (7), the turbine part (6) is arranged in an exhaust port (18) of the combustion engine (10) and the compressor part (5) is accommodated in the intake tract (2) of the combustion engine (10), wherein the compressor part (5) comprises a housing comprising an air inlet and an air outlet, the air inlet and the air outlet are interconnected via a flow channel and through rotation of the compressor part (5, 23) compression of charge air can be achieved, wherein the compressor part (5, 23) of the exhaust gas turbocharger (4) can be driven with an independent electric auxiliary drive (24) independent of the load of the combustion engine (10), **characterized in that** the independent electric auxiliary drive (24) is switched on with a time lead (48) with respect to the reaching of a lower rotational speed threshold of a critical rotational speed range (44) of the combustion engine (10).

2. The exhaust gas turbocharger (4) according to Claim 1, **characterized in that** the compressor part (5, 23) of the charging device (4) with respect to the drive direction of rotation of the electric drive (24) is rotatably mounted on the charger shaft (7).

3. The exhaust gas turbocharger according to Claim 2, **characterized in that** the compressor part (5, 23) of the charging device (4) is mounted on the charger shaft (7) by means of a freewheel device (29).

4. The exhaust gas turbocharger (4) according to Claim 3, **characterized in that** the freewheel device 29 permits rotation of the compressor part (5, 23) relative to the charger shaft (7) within the critical rotational speed range (44) of the combustion engine and above the critical rotational speed range (44) of the combustion engine (10) blocks the rotation of the compressor part (5, 23) relative to the charger shaft (7).

5. The exhaust gas turbocharger (4) according to Claim 4, **characterized in that** the critical rotational speed range (44) of the combustion engine (10) within which the freewheel device (29) releases a relative movement of the compressor part (23) relative to the charger shaft (7) is below a rotational speed of the combustion engine (10) of 2000 rpm.

6. The exhaust gas turbocharger (4) according to Claim 1, **characterized in that** between the charger shaft (7) of the charging device (4) and the independent electric auxiliary drive (24) a clutch (26, 27, 28) is arranged which on reaching a blocking function which for stopping the rotation of the compressor part (25) relative to the charger shaft (7) through the freewheel device (29) above the critical rotational speed range (44) interrupts the drive connection between the independent electric auxiliary drive (24) and the compressor part (5, 23) of the exhaust gas turbocharger (4).

7. The turbocharger device (4) according to Claim 6, **characterized in that** the clutch (26) comprises a clutch surface (27) on the drive side and a clutch surface (28) on the output side, wherein the clutch surface (27) on the drive side is embodied on the drive shaft (25) of the independent electric auxiliary drive (24) and the clutch surface (28) on the output side on the compressor rotor (23).

8. The exhaust gas turbocharger (4) according to Claim 1, **characterized in that** the turn-off time (41) of the independent electric auxiliary drive (26) coincides with the upper rotational speed threshold of the critical rotational speed range (44) of the combustion engine (10).

9. The exhaust gas turbocharger (4) according to Claim 3, **characterized in that** the freewheel device (29) is mounted within a clearance (22) of the compressor part (5, 23) and comprises freewheel elements (30) which are mounted between two limitation discs (31, 32).

10. The exhaust gas turbocharger (4) according to Claim 6, **characterized in that** the clutch (26, 27, 28) acting in the direction of rotation of the turbine part (6) of the charging device (7) interrupts the drive connection between the charger shaft (7) and the electric auxiliary drive (24) on reaching an upper rotational speed threshold of the critical rotational speed range (44).

## Revendications

1. Turbocompresseur à gaz d'échappement (4) pour des moteurs à combustion interne (10), qui comprend une partie turbine (6) et une partie compresseur (5), lesquelles sont réceptionnées sur un arbre suralimenté (7) commun, laquelle partie de turbine (6) est disposée dans un canal de gaz d'échappement (18) du moteur à combustion interne (10) et laquelle partie compresseur (5) est logée dans la branche d'aspiration (2) du moteur à combustion interne (10), la partie compresseur (5) présentant un carter comprenant une entrée d'air et une sortie d'air, l'entrée d'air et la sortie d'air étant reliées entre elles par un canal d'écoulement et une compression d'air de suralimentation pouvant être obtenue par la rotation de la partie compresseur (5, 23), la partie compresseur (5, 23) du turbocompresseur à gaz d'échappement (4) pouvant être entraînée avec un entraînement supplémentaire (24) électrique autonome indépendamment de la charge du moteur à combustion interne (10), **caractérisé en ce que** l'entraînement supplémentaire (24) électrique autonome est enclenché avec une avance dans le temps (48) par rapport au moment où l'on obtient un seuil de régime inférieur d'une plage de régime critique (44) du moteur à combustion interne (10).

2. Turbocompresseur à gaz d'échappement (4) selon la revendication 1, **caractérisé en ce que** la partie compresseur (5, 23) du dispositif suralimenté (4) est réceptionnée de façon rotative sur l'arbre suralimenté (7) par rapport au sens de rotation d'entraînement de l'entraînement (24) électrique.

3. Turbocompresseur à gaz d'échappement (4) selon la revendication 2, **caractérisé en ce que** la partie compresseur (5, 23) du dispositif suralimenté (4) est réceptionnée au moyen d'un système de marche à vide (29) sur l'arbre suralimenté (7).

4. Turbocompresseur à gaz d'échappement (4) selon la revendication 3, **caractérisé en ce que** le système de marche à vide (29) à l'intérieur d'une plage de régime critique (44) du moteur à combustion interne (10) autorise une rotation de la partie compresseur (5, 23) par rapport à l'arbre suralimenté (7) et la bloque au-dessus de la plage de régime critique (44) du moteur à combustion interne (10) de la rotation de la partie compresseur (5, 23) par rapport à l'arbre suralimenté (7).

5. Turbocompresseur à gaz d'échappement (4) selon la revendication 4, **caractérisé en ce que** la plage de régime critique (44) du moteur à combustion interne (10), dans laquelle le système de marche à vide (29) autorise un déplacement relatif de la partie compresseur (23) par rapport à l'arbre suralimenté (7), est située au-dessous d'un régime du moteur à combustion interne (10) de 2000 t/min.

6. Turbocompresseur à gaz d'échappement (4) selon la revendication 1, **caractérisé en ce qu'**un accouplement (26, 27, 28) est disposé entre l'arbre suralimenté (7) du dispositif suralimenté (4) et 1"entraînement supplémentaire (24) électrique autonome, lequel accouplement interrompt la liaison d'entraînement entre l'entraînement supplémentaire (24) électrique autonome et la partie compresseur (5, 23) du turbocompresseur à gaz d'échappement (4) lorsqu'on atteint une fonction de blocage pour supprimer la rotation de la partie compresseur (25) par rapport à l'arbre suralimenté (7) par le système de marche à vide (29) au-dessus de la plage de régime (44) critique.

7. Turbocompresseur à gaz d'échappement (4) selon la revendication 6, **caractérisé en ce que** l'accouplement (26) présente une surface de couplage (27) côté entraînement et une surface de couplage (28) côté sortie, la surface de couplage (27) côté entraînement étant réalisée sur l'arbre d'entraînement (25) de l'entraînement supplémentaire (24) autonome électrique et la surface de couplage (28) côté sortie sur la roue à aubes de compresseur (23).

8. Turbocompresseur à gaz d'échappement (4) selon la revendication 1, **caractérisé en ce que** le moment de déconnexion (41) de l'entraînement supplémentaire (25) électrique autonome coïncide avec le seuil de régime supérieur de la plage de régime critique (44) du moteur à combustion interne (10).

9. Turbocompresseur à gaz d'échappement (4) selon la revendication 3, **caractérisé en ce que** le système de marche à vide (29) est réceptionné à l'intérieur d'un évidement (22) de la partie compresseur (5, 23) et comprend des éléments de marche à vide (30) qui sont réceptionnés entre deux disques de délimitation (31, 32).

10. Turbocompresseur à gaz d'échappement (4) selon la revendication 6, **caractérisé en ce que** l'accouplement (26, 27, 28), agissant dans le sens de rotation d'entraînement de la partie de turbine (6) du dispositif suralimenté (7), interrompt la liaison d'entraînement entre l'arbre suralimenté (7) et l'entraînement supplémentaire (24) électrique lorsqu'on atteint un seuil de régime supérieur de la plage de régime critique (44).
